(19) Europäisches Patentamt / European Patent Office / Office européen des brevets

(11) **EP 4 054 977 B1**

(12) **EUROPEAN PATENT SPECIFICATION**

(45) Date of publication and mention
of the grant of the patent:
**20.08.2025 Bulletin 2025/34**

(21) Application number: **20764372.7**

(22) Date of filing: **28.08.2020**

(51) International Patent Classification (IPC):
**C01B 17/50** (2006.01)    **C01B 17/79** (2006.01)
**B01J 23/22** (2006.01)

(52) Cooperative Patent Classification (CPC):
**C01B 17/508; B01J 23/22; C01B 17/79**

(86) International application number:
**PCT/EP2020/074103**

(87) International publication number:
**WO 2021/089217 (14.05.2021 Gazette 2021/19)**

(54) **PROCESS AND PLANT FOR PRODUCING SULPHURIC ACID**

VERFAHREN UND ANLAGE ZUR HERSTELLUNG VON SCHWEFELSÄURE

PROCÉDÉ ET INSTALLATION DE PRODUCTION D'ACIDE SULFURIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Validation States:
**MA**

(30) Priority: **04.11.2019 DE 102019129680**

(43) Date of publication of application:
**14.09.2022 Bulletin 2022/37**

(73) Proprietor: **Metso Metals Oy
02230 Espoo (FI)**

(72) Inventors:
• **DAUM, Karl-Heinz
  65549 Limburg (DE)**
• **BRÄUNER, Stefan
  Scarborough, Western Australia 6019 (AU)**
• **NEUMANN, Ralf
  61250 Usingen (DE)**

(74) Representative: **Keil & Schaafhausen
Patentanwälte PartGmbB
Bockenheimer Landstraße 25
60325 Frankfurt am Main (DE)**

(56) References cited:
EP-A1- 0 218 411    EP-A2- 2 256 085
EP-B1- 0 218 411    WO-A2-2005/105666

**Description**

The present invention relates to a process and its associated plant for producing sulphuric acid, in which a sulphur dioxide containing gas at least partly reacts with oxygen contained in this same gas in a converter featuring at least two sequenced catalyst beds to form sulphur trioxide, and in which the produced sulphur trioxide containing gas introduced into an absorber wherein in its further converted to sulphuric acid.

The production of sulphuric acid is well-known for decades. The so-called double absorption process is detailed described in Ullmann's Encyclopaedia of Industrial Chemistry, 5th edition, Vol. A25, pages 635 to 700. Therefore, elementary sulphur is burnt with oxygen contained in ambient air, to form sulphur dioxide. Then the sulphur dioxide is catalytically converted to sulphur trioxide. While an irreversible damage of the catalyst occurs at temperatures above ~640 °C, the same is inactive at temperatures below ~380 °C. To avoid damages of the catalyst, typically sulphur dioxide contents are limited to maximally 13 vol.-% since otherwise the exothermicity of the oxidation reaction would lead to hotspots above the critical temperature, when gases of a higher concentration are used.

On the other hand, while increasing $SO_2$-concentration by burning sulphur with air, the residual $O_2$-concentration ex combustion diminishes accordingly and hence the thus reduced $O_2/SO_2$-ratio would cause a reduced conversion of $SO_2$ and thus an increase of $SO_2$ emissions to the stack, possibly being beyond statutory limits. Therefore, in practice, a typical limit of the $SO_2$-concentration is around 11.5 vol.-%, -with corresponding residual $O_2$-concentration of ~9.2 vol.-% for gas being fed to the catalytic oxidation, i.e. a molar ratio of $O_2/SO_2$ of 0.8.

As a result, very large gas volumes must be passed through the converter and other related equipment. This leads to large capital expenditure (CAPEX) and operating expenditure (OPEX) of the sulphuric acid plant.

To overcome these disadvantages, processes for producing sulphuric acid, based on sulphur combustion gas, have already been proposed, in which starting gases with a sulphur dioxide content of more than 13 vol.-% can be supplied to the catalyst. However, these processes fail to match the required emission standards as a result of the influence of the reduced partial pressure of oxygen.

As explained above, conventional technology is characterized by a feed gas to the catalytic $SO_2$ converter, typically containing a maximum of 11.5 - 12.0 vol.-% of $SO_2$. As an oxygen source, ambient dried air is fed into the sulphur combustion furnace. The initial oxygen content of said air amounts to ~ 20.9 vol.-%. The sulphur combustion leads to a consumption of oxygen according to the reaction

$$S + O_2 \rightarrow SO_2 \ \Delta H = -297 \ kJ/mol$$

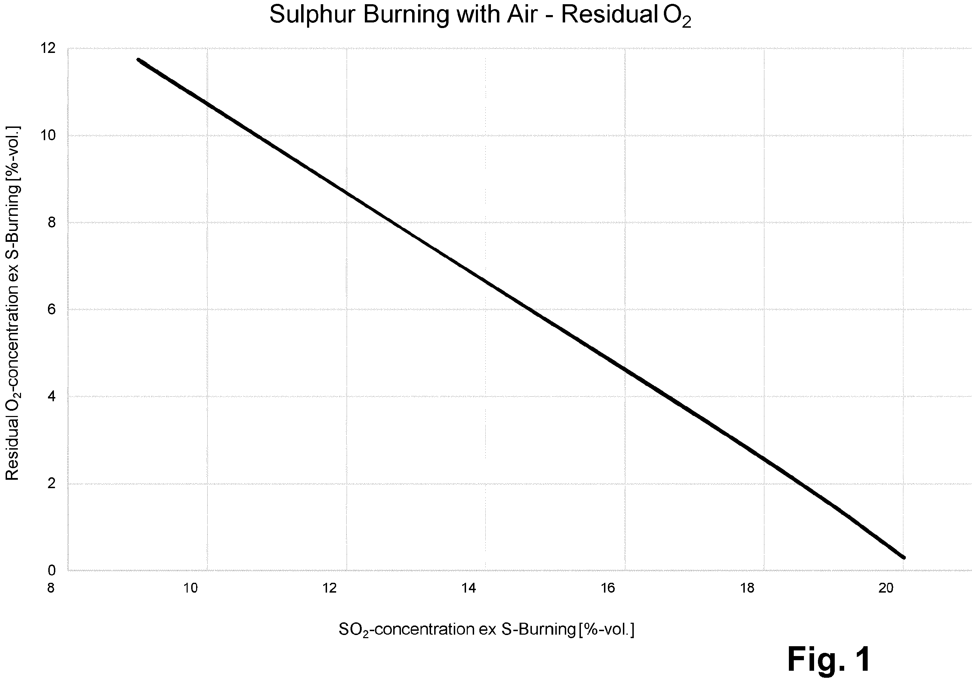

The residual $O_2$ content of the gas originating from the combustion with air is correlated to the desired $SO_2$ concentration of said gas, as it can be seen from fig. 1.

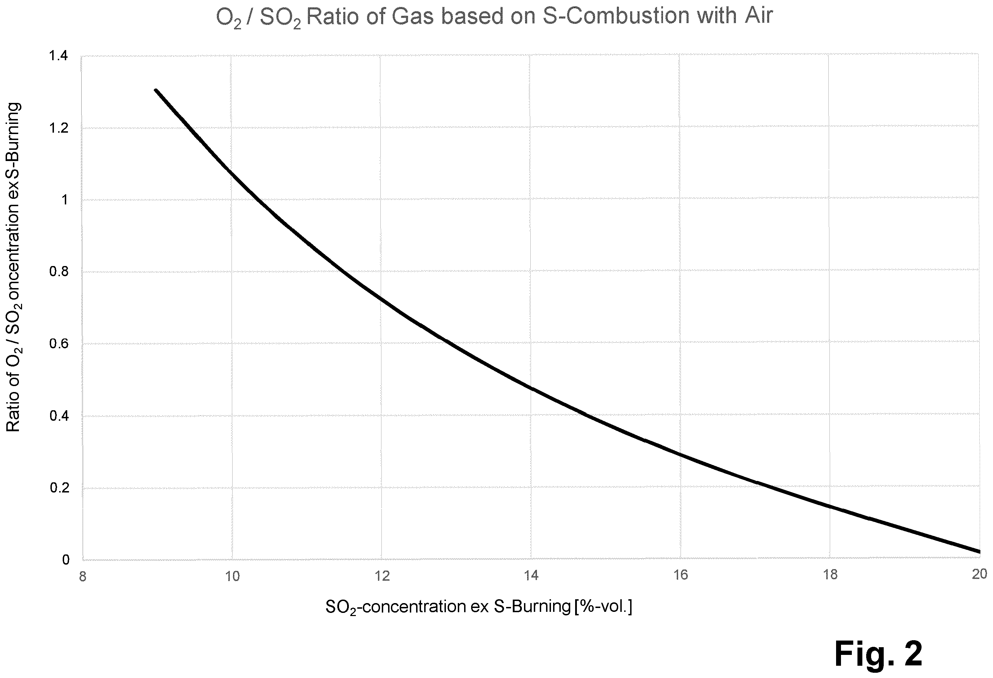

Therefore, the resulting ratio of $O_2/SO_2$ shows the course as presented in fig. 2.

In case such gas is fed directly to a catalytic oxidation converter to process the $SO_2$ gas into $SO_3$, more oxygen is required, according to

$$SO_2 + \frac{1}{2}O_2 \rightarrow SO_3 \ \Delta H = -99 \ kJ/mol$$

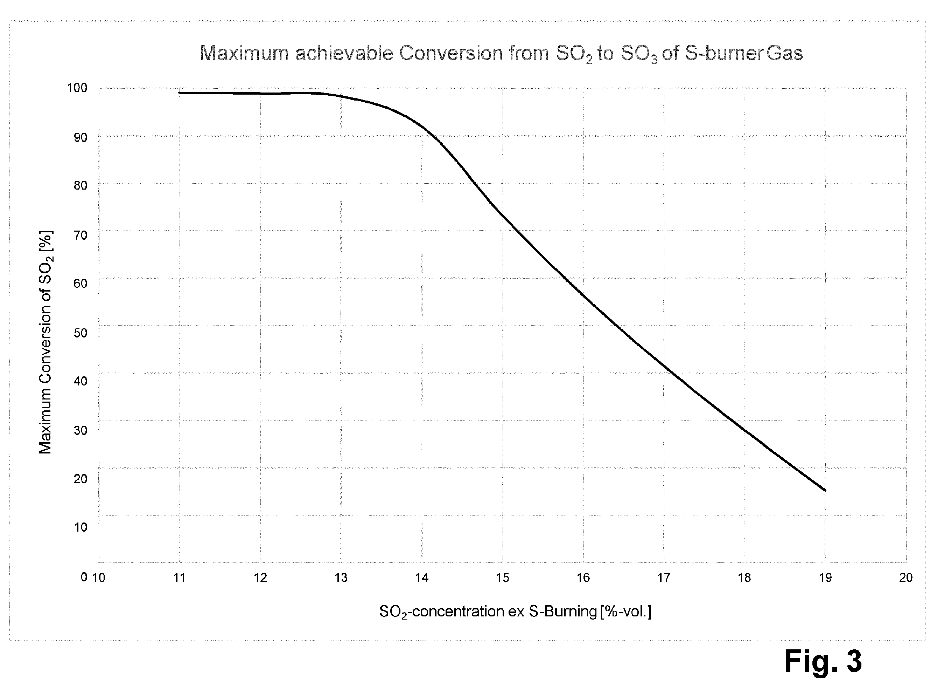

Consequently, the theoretical stoichiometric molar ratio of $O_2/SO_2$ of this feed gas must be >= 0.5 to enable a complete conversion. It is obvious that the thermodynamic equilibrium of the technical reaction requires a larger ratio, i.e. stoichiometric excess of oxygen, - subject to the overall desired degree of conversion. The overall achievable maximum conversion of said catalytic reaction is shown qualitatively in fig. 3 for sulphur combustion gas with air and resulting $SO_2$ concentrations of 11-19 vol.-% (with $O_2$ content according to fig.1.).

Obviously, an $O_2/SO_2$ ratio of the gas fed to the catalytic converter below 0.5 does not allow to target full quantitative conversion and current plants are thus designed at a minimum molar $O_2/SO_2$-ratio of ~ 0.75 to 0.85, which still provides sufficient excess oxygen to achieve an acceptable overall $SO_2$ conversion of typically 99.8% with double-absorption technology. The lower the $SO_2$ concentration in the feed gas (and thus the higher the $O_2/SO_2$ ratio), the better is the conversion efficiency, up to and beyond 99.9 %.

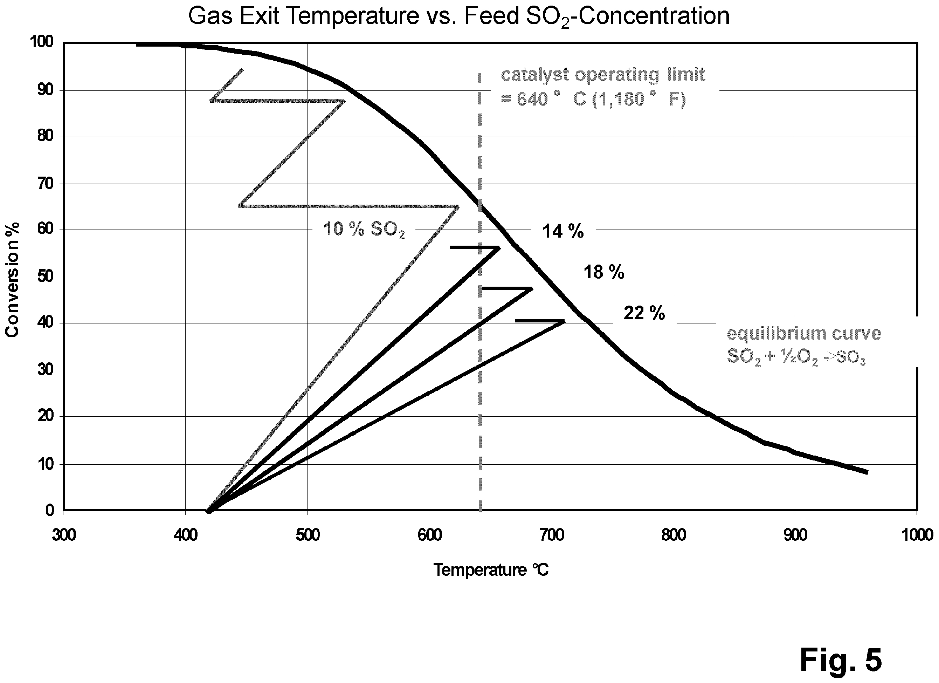

It is well-known in the sulphuric acid manufacturing industry that processing high $SO_2$ concentrated gas, such excessively high $SO_2$ concentrations will affect the adiabatic oxidation temperature at the exit of the first catalytic bed, i.e. may lead to inacceptable high temperatures, which would irreversibly deteriorate / destroy the function of the catalyst. As described in detail in DE 10 2004 022 506, higher $SO_2$ concentration fed to the first catalyst bed will result in excessive gas temperatures, based on adiabatic operation. For gas of metallurgical origin, this is presented in fig. 5 based on a ratio of $O_2/SO_2$ = ~0.8.

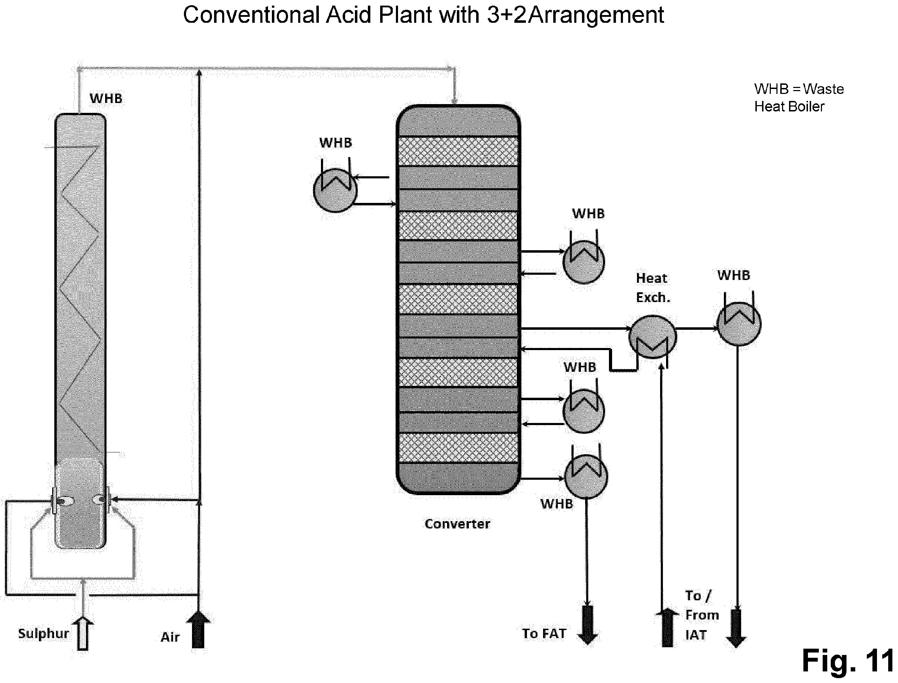

A typical process schematic of a conventional sulphuric acid plant based on sulphur combustion with air is presented in fig.11.

It has been proposed to add various amounts or ratios of technical (bulk tonnage) oxygen or oxygen enriched air, both for the combustion of sulphur and/or as an additional feed to the catalytic converter, with the aim to increase the overall plant efficiency, reduce cost of equipment or minimize gaseous emissions from such plants. WO2005/105666 A2 describes a process applying a gas with >20 vol.-% $SO_2$ with an $SO_2/O_2$-ratio of >2.67 and provides examples of $SO_2$-concentrations up to 95 vol.-%, - with and without various recirculation of process gas.

Similarly, DE 2 223 131 presents a process with addition of technical oxygen to the sulphur combustion and partial recirculation of process gas for the purpose of managing temperatures and emissions and of course, reduction of the cost of equipment.

From EP 0 218 411 A1 a method and plant for generating sulfuric acid from a sulfur-containing material is known. A feed gas comprising more than 16 vol.-% $SO_2$ and at least 30 vol.-% of $CO_2$ is obtained by burning said sulfur-containing material and a carbon-containing fuel in a first reactor stage. After drying, the gas stream is fed to a multistage converter to form $SO_3$. Prior to entering the first stage, oxygen is added and the ratio of $O_2$ to $SO_2$ adjusted to below 0.5, preferably to between 0.25 to 0.29. In between the first and second stage, said ratio is adjusted to a value in the range 0.4 to 0.5 by oxygen addition. Further, the temperature of the gas stream is adjusted upstream of each stage to optimize the conversion conditions. The obtained $SO_3$ is subsequently absorbed to form sulfuric acid.

EP 2 256 085 A2 describes a process and plant for the continuous catalytic oxidation of a feed gas comprising between 0.1 to 66 vol.-% $SO_2$ under quasi-isothermal conditions in a tube contactor reactor. Said quasi-thermal conditions are achieved by inducing/dissipating heat in dependency of the $SO_2$ concentration in the feed gas. The $O_2$ to $SO_2$ ratio is adjusted to a range between 0.5 to 1.2 prior to entering the tube reactor by oxygen addition. An only partially converted product gas stream may further be supplied to a standard Double Contact stage, whereby the residual $SO_2$ has to be < 13 vol.-%.

WO 2005/105666 A2 discloses a process and plant for producing sulfuric acid from a starting gas comprising more than 16 vol.-% $SO_2$. Said gas is supplied to a first contact stage with a $O_2$ to $SO_2$ ratio of less than 0.37. Thereby, low oxygen content prevents overheating of the catalyst. The $O_2$ to $SO_2$ ratio of the partially converted gas leaving the first stage may be adjusted to hyper- or substoichiometric levels prior to any further contact stage by addition of an oxygen-containing gas.

The use or addition of oxygen or oxygen enriched air, compared to the traditional process using air only as an oxygen source, does lead to the processing of less gas volumes and hence lower plant capital expenditure, as is the purpose of the two above mentioned patents.

Summing up, an operation of an acid plant based on sulphur combustion with air or oxygen enriched air resulting in significantly higher $SO_2$ concentrations of the gas fed to the catalytic conversion to $SO_3$, would offer huge advantages as the overall capital and operating costs would be reduced.

Therefore, it is the object of the current invention to provide an alternative process for producing $SO_3$ from $SO_2$ containing gas, generated from combustion of elemental sulphur with air, and separate oxygen or oxygen enriched air addition for enhanced $SO_2$ conversion to the catalytic converter, with increased economic efficiency and overall profitability of sulphuric acid production.

Technical grade bulk oxygen can be added to this combustion gas prior or past the first catalytic bed to provide a suitable $O_2/SO_2$ molar ratio, sufficient to achieve a reasonable low $SO_2$ stack emission rate and being in line with prevailing statutory requirements.

Said problem is further solved also with a process according to claim 1.

It is the basic idea of this invention that via a line an amount A of the admixed oxygen is added into one catalyst bed whereby the amount A is calculated such that the equilibrium at the given temperature in the relative catalyst bed depending on the sulphur dioxide content is reached.

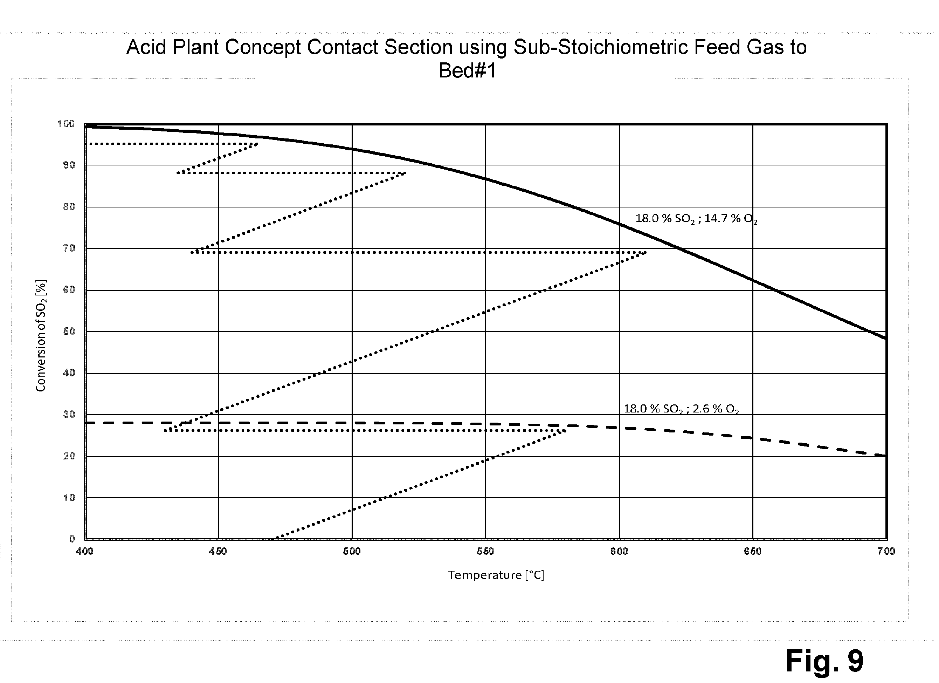

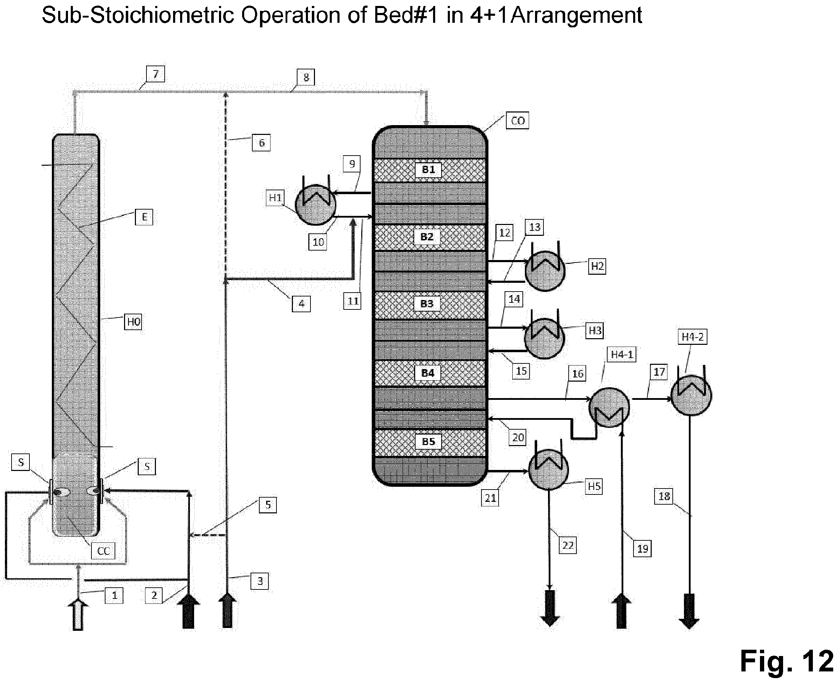

This is illustrated in fig. 12. According to said fig. 12., a typical sulphur combustion gas with 18 vol.-% $SO_2$ using solely air as raw material is fed to a first catalytic bed at typically ~470°C, thereafter partially oxidized by a catalyst to $SO_3$ to an extend determined by its $O_2$ concentration, adiabatically arriving at a temperature of approximately 580°C, can achieve an overall conversion of the inlet amount of $SO_2$ to approximately 28%. The related temperature-conversion diagram is presented at fig. 9. Adding an appropriate amount of bulk oxygen to said exit from the first bed, will achieve a virtual overall gas composition of e.g. 18 vol.-% $SO_2$ and 14.7 vol.-% $O_2$. Feeding said gas with a conventional temperature to the second catalytic bed, and in continuation to further subsequent catalytic beds with appropriate intermediate cooling between beds, will in this example arrive at a total degree of conversion of approximately 96% prior to the intermediate absorption of the $SO_3$. At this 4+1 arrangement, a total desired conversion of >99.8 % can be achieved.

In detail, in such a process for producing sulphuric acid a feed gas containing sulphur dioxide and oxygen at least partly reacts in a converter featuring at least one catalyst bed to form sulphur trioxide at a given temperature and the produced sulphur trioxide containing gas introduced into an absorber wherein it is further converted to sulphuric acid. The feed gas to the first catalyst bed is generated by combustion of elemental sulphur with air or oxygen enriched air. Thereby, said feed gas featuring a sulphur dioxide content between 14.0 and 20.0 vol-%, and said feed gas featuring a molar ratio of oxygen to sulphur dioxide of $0.05 < R < 1.0$ of $O_2/SO_2$. Oxygen or oxygen enriched air is admixed to the gas leaving the first catalyst bed, prior to entering a subsequent catalyst bed, to an amount to enable the overall desired conversion of $SO_2$ considering all catalyst beds of the plant. No oxygen addition or oxygen enriched air addition is required when the plant is operated below 65 % of name plant capacity and/or below a value of 11,5 for a ratio of the content of not-converted $SO_2$ to the $SO_2$ content in the feed, while the required amount of oxygen is gradually reduced from a nominal figure at name plate capacity down to zero at said 65 % load and/or said ratio.

The gas leaving the first catalyst bed is cooled and mixed with bulk oxygen or oxygen enriched air prior to entering the subsequent bed, with an amount sufficient to achieve an overall ratio of $O_2/SO_2$ of $0.4 < R < 1.1$, relative to the initial feed gas $SO_2$ concentration to the first catalyst bed.

In addition or alternatively, the gas leaving the second or further subsequent catalyst beds is cooled and mixed with bulk oxygen or oxygen enriched air to achieve an overall ratio of $O_2/SO_2$ of $0.7 < R < 1.2$, relative to the initial feed gas $SO_2$ concentration to the first catalyst bed.

It shall be noted that the above plant load ratio of typically ~65% is specific to a feed $SO_2$ of 18 vol.-% to a "nominal" concentration of 11.5 vol.-% $SO_2$ (= 11.5 / 18 = ~0.65) is valid for said specific condition. More general, this ratio shall be regarded as being (11.5 % $SO_2$ / feed $SO_2$ %), thus generalized for all feed concentrations between 14 and 20 vol.-%. $SO_2$.

Said problem is further solved also with a process according to claim 10.

The process contains the following steps:

(i) Combustion of elemental sulphur with dried ambient air (only) and thereby producing a gas containing an $SO_2$-concentration above the conventional level of typically 11.5 vol.-%, preferably with ~ 18-20 vol.-% with a respective residual oxygen content,

(ii) feeding this $SO_2$ containing gas to a first catalytic bed and reacting at least a portion of the said sulphur dioxide with at least part of the oxygen therein to form sulphur trioxide,

(iii) operating said first catalytic bed with a stoichiometric lack of oxygen, i.e. below a molar ratio of $O_2/SO_2 = 0.5$,

In order to achieve a sustainable operation and activity of the catalyst, it has been found that for a sulphur dioxide content between 14.0 and 19.0 vol-% the range of gas inlet temperature $T_{in}$ to the first catalytic bed has to be between $T_{in\text{-}min}$ and $T_{in\text{-}max}$, which are calculated as

$$T_{in\text{-}min} = -0.066 \times c^3 + 3.3 \times c^2 - 44.2 \times c + 585,$$

preferably

$$T_{in\text{-}min} = -0.066 \times c^3 + 3.3 \times c^2 - 44.2 \times c + 590$$

and

$$T_{in\text{-}max} = -0.066 \times c^3 + 3.3 \times c^2 - 44.2 \times c + 615,$$

preferably

$$T_{in\text{-}max} = -0.066 \times c^3 + 3.3 \times c^2 - 44.2 \times c + 610$$

with c [%-vol.] defined as the $SO_2$ concentration of the feed gas.

For a sulphur dioxide content above 19.0 vol-% and below 20.0 vol-%, the range of gas inlet temperature $T_{in}$ is fixed to 490 °C +/- 15 °C, preferably +/- 10 °C. This temperature leads to a sustainable operation and activity of the catalyst, whereby it is possible to achieve the adiabatically exit temperature of the catalytic bed and, according to the thermodynamic equilibrium the maximum turnover.

The following designs are preferred designs of the two independent claims 1 and 10:
The method leads to particular good results if the gas feed to the first catalyst bed has a sulphur dioxide content between 17 and 19 vol.% and/or a molar ratio of $O_2/SO_2$ of $0.15 < R < 0.22$.

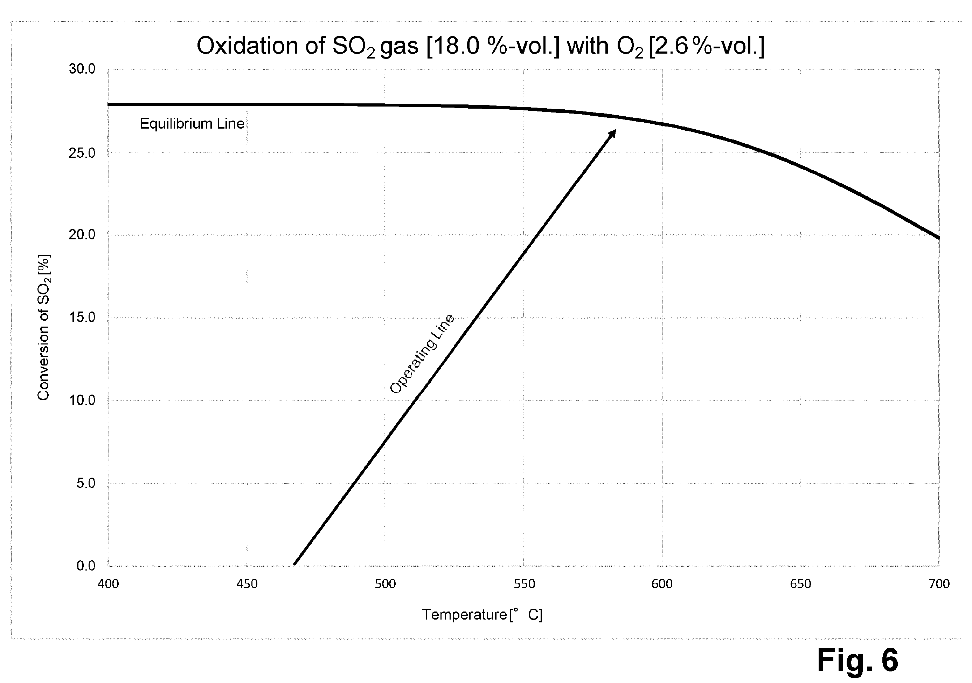

Summing up, the combustion gas of the sulphur with air, containing a typical overall ~18 vol.-% $SO_2$ will have a residual oxygen content of $O_2$ of ~ 2,6 vol.-%, thus not suitable to directly feeding a catalyst bed for maximized conversion of $SO_2$ to $SO_3$ (see fig. 6).

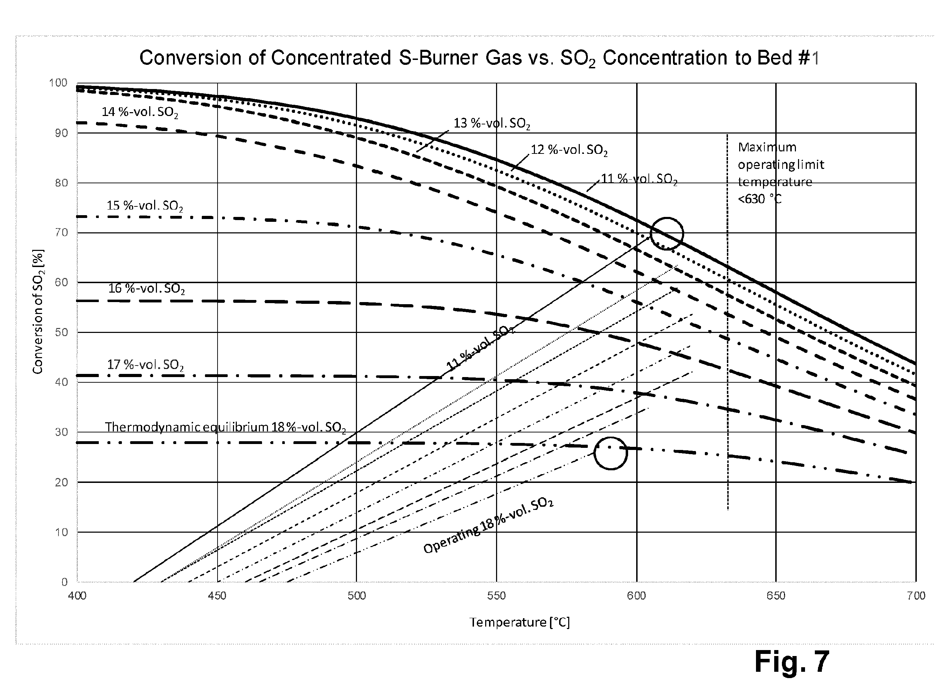

Based on sulphur-burning with air, fig. 7 illustrates the thermodynamic equilibrium lines vs the operating lines at various SO$_2$ feed concentrations at the first bed catalyst. Therein, the achievable bed exit temperatures and relating conversions can be seen, as a result of the limits set by the thermodynamic equilibrium. The operating line hits the equilibrium line for e.g. 18 vol.-% gas at typically ~580 °C (starting with 475°C) and corresponding ~28 % conversion. Obviously, the thermodynamic equilibrium prevents any higher temperature and conversion despite the high SO$_2$ feed concentration. Similarly, an 11 %-vol. SO$_2$ gas crosses the equilibrium line at ~620 °C (starting with 420°C), at close to 70 vol.-% conversion.

While a conventional plant offers a typical turn-down ratio of 40%, this oxygen enhanced process offers a turn-down ratio to 25%. As a result, the exit temperature of said catalyst bed does not exceed the maximum tolerable temperature of say 640°C. In this context, it is particularly preferred that oxygen is admixed only to a contact stage downstream of a first contact stage, thus with already reduced content of sulphur dioxide and presence of sulphur trioxide, the oxygen content is increased. For a typical arrangement of a 4+1 configuration, i.e. 4 catalytic beds prior and 1 catalytic bed post the intermediate absorption of SO$_3$, but can also be applied for any other configuration, e.g. 2+1, 2+2, 3+1, 3+2 and the like.

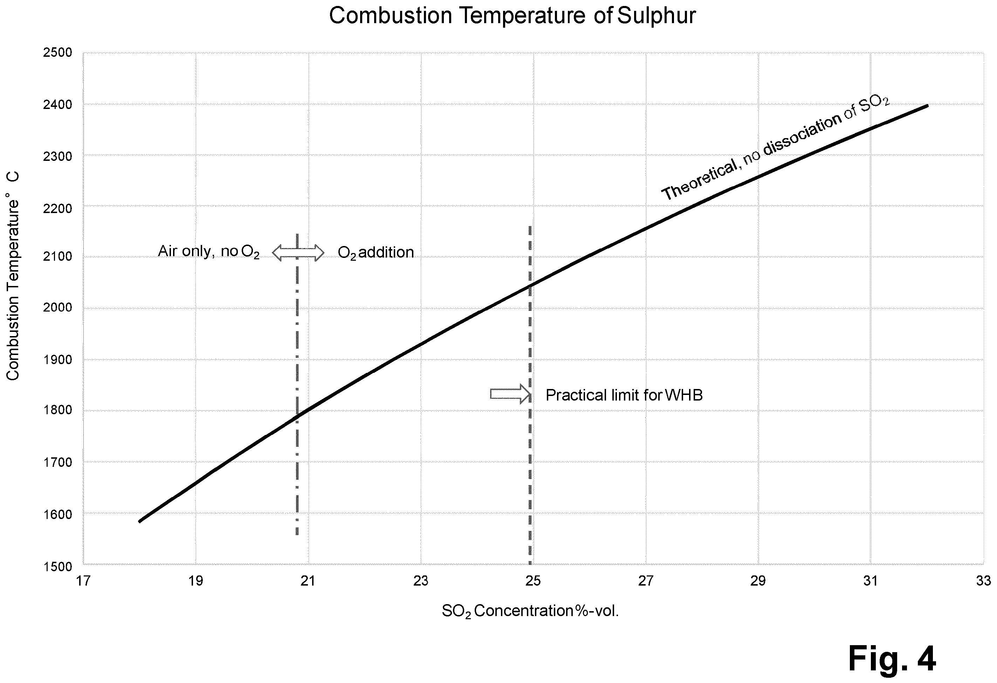

As an option to the sulphur combustion with air only, oxygen enrichment can also be used for the combustion of sulphur. The adiabatic combustion of sulphur with air or oxygen enriched air is presented in fig. 4. The resulting combustion temperatures are shown therein.

If only air is used as oxygen supplier, a maximum SO$_2$-concentration of about 21 vol.-% can be achieved. Addition of bulk oxygen to the combustion air enables the production of significantly higher SO$_2$ concentrations up to say ~25 vol.-%, whereas this limit is given by the resulting high adiabatic combustion temperature, which should not exceed ~2000°C, considering the mechanical design of the downstream equipment, e.g. waste heat boiler. To overcome this restriction, recirculation techniques have been developed earlier as it is e.g. shown in WO 2005/105666, which practically allow the production of virtually 100 vol.-% SO$_2$ gas by using pure oxygen.

No O$_2$ addition is needed for cases wherein the plant is operated typically below 65% of nameplate capacity. For this case, it is also preferred to reduce the SO$_2$ concentration of the gas fed to the first catalyst bed down to 11.5 vol.-% SO$_2$. Preferably, the reduction is done gradually to make no sudden changes.

Moreover, using a catalyst comprising vanadium pentoxide is a preferred embodiment of this invention, as this catalyst is well established in the market.

Simplified, the mechanism of the oxidation of sulphur dioxide with oxygen to form sulphur trioxide using conventional vanadium-based catalyst is characterized by

$$V_2O_5 + SO_2 = V_2O_4 + SO_3$$

and further

$$V_2O_4 + \tfrac{1}{2}\, O_2 = V_2O_5$$

whereas the re-oxidation of the V$_2$O$_4$ with O$_2$ is regarded to be the limiting factor of the heterogeneous catalytic reaction with a vanadium-based catalyst.

Coming back to the basic idea underlying the invention, it can also bee seen from the equations that SO$_2$ containing gas composition characterized by a lack of oxygen well below the stoichiometric ratio of 0.5 will therefore at least diminish the rate of the oxidation reaction remarkably. As described in WO 2005/105666 A2, this diminishing effect can be offset by an increased temperature of reaction, thus compensating the said reduced rate by applying Arrhenius' law.

In this context it has been found that supplying a sub-stoichiometric contact gas (with regard to O$_2$) to the first contact stage with a temperature of at least 450 °C, and particularly preferably of at least 470 °C and/or with a pressure of 1 to 30 bar, and particularly preferably of 1.5 to 10 bar leads to particularly good conversion rates, -within the limits given by the thermodynamic equilibrium.

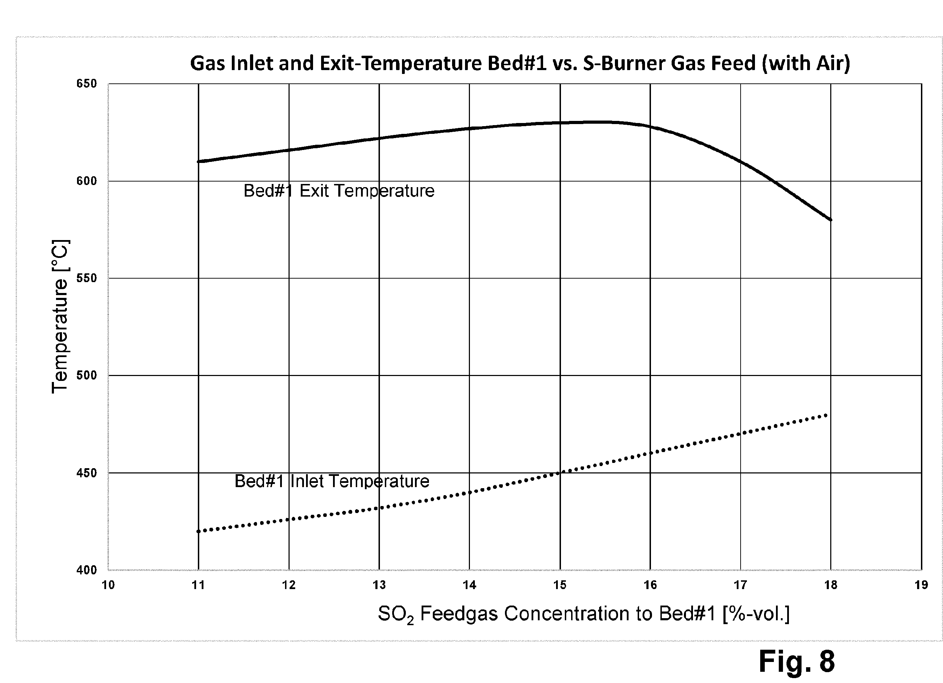

A relationship is presented in fig. 8. Because of the inlet gas composition and temperature T$_{in}$, the adiabatically achievable exit temperature of the catalytic bed according to the thermodynamic equilibrium, is limited to the values as shown at this fig. 8.

It is preferred that the feed gas to the catalytic converter contains between 1 and 5 vol.-% of residual oxygen. These are oxygen contents typically found in off-gases from sulphur burning, which means that such off gases can be directly used in a conversion according to this invention. However, such a gas, e.g. containing ~18 vol.-% SO$_2$ would not lead to any noteworthy overall conversion of SO$_2$ (refer fig. 6).

As already touched above, it is particularly preferred that the feed gas to the SO$_2$ oxidation catalyst originates from a combustion of elemental sulphur with air only.

As also explained, the SO$_2$ converter features at least two contact stages or catalyst beds, whereby oxygen is admixed to at least one contact stage such that the equilibrium at the given temperature in the stage depending on the sulphur dioxide content is reached. Such a design offers the possibility to cool between the stages.

It is the basic idea of this invention that via a line an amount A of the admixed oxygen is added into one catalyst bed whereby the amount A is calculated such that the equilibrium at the given temperature in the relative catalyst bed depending on the sulphur dioxide content is reached.

Moreover, the invention covers also a plant with the features of claim 20 to produce sulphuric acid according to the method known from claims 1 to 10. As the essential feature, the plant features a control unit for a sulphur dioxide content between 14.0 and 19.0 vol-% the range of the gas inlet temperature $T_{in}$ into to the first catalyst bed is controlled or regulated to a range between $T_{in-min}$ and $T_{in-max}$, which are calculated as

$$T_{in-min} = - 0.066 \times c^3 + 3.3 \times c^2 - 44.2 \times c + 585$$

$$\text{and } T_{in-max} = - 0.066 \times c^3 + 3.3 \times c^2 - 44.2 \times c + 615$$

with c [%-vol.] defined as the $SO_2$ concentration of the feed gas.

For a sulphur dioxide content above 19.0 vol-% and below 20.0 vol-%, the range of gas inlet temperature $T_{in}$ is controlled or regulated to 490 °C +/- 15 °C.

In particular, the plant for producing sulphuric acid features a control unit wherein the inlet temperature $T_{in}$ to the first catalyst bed is controlled or regulated depending on the $SO_2$ content of the feed gas within the range of 11 and 19 vol.-% according to

$$T_{in} = - 0.066 \times {}^{c3} + 3.3 \times c^2 - 44.2 \times c + 600$$

with a tolerance of +/- 10°C,
whereas
c = $SO_2$ concentration of the feed gas to the first catalyst bed [vol.-%],
or when the sulphur dioxide content c is more than 19 vol-%, then $T_{in}$ is fixed to 490 °C +/- 10°C.

Additional features, advantages and possible applications of the invention are found in the following description of exemplary embodiments and the drawings. All the features described and/or illustrated graphically form the subject matter of the invention, either alone or in any desired combination, regardless of how they are combined in the claims or in their references back to preceding claims.

The drawings show schematically:

Fig. 1:     Sulphur burning with air - residual $O_2$

Fig. 2:     $O_2/SO_2$ ratio of gas based on S-combustion with air

Fig. 3:     Maximum achievable conversion from $SO_2$ to $SO_3$ of S-burner gas

Fig. 4:     Combustion temperature of sulphur

Fig. 5:     Gas exit temperature vs. feed $SO_2$ concentration

Fig. 6:     Oxidation of $SO_2$ gas (18%$SO_2$) with $O_2$ (2.6%-vol.)

Fig. 7:     Conversion of concentrated S-burner gas vs. $SO_2$ concentration to bed#1

Fig. 8:     Gas inlet and exit temperature bed#1 vs. S-burner feed gas

Fig. 9:     Acid plant concept contact section using sub-stoichiometric feed gas to bed#1

Fig. 10:    Part load operation 7,800 mtpd acid plant

Fig. 11:    Conventional acid plant with 3+2 arrangement

Fig. 12: Sub-stoichiometric operation of bed#1

Figures 1 to 11 has already been discussed with regard to the understanding underlying the invention.

According to fig. 12, liquid sulphur is fed via line 1 to the plant, together with combustion air line 2 and oxygen line 3.

At least one burner S is foreseen in a combustion chamber CC. Said combustion chamber CC is preferably situated in the same housing HO, wherein also at least one heat exchanger E is positioned.

Optionally, oxygen can be added to the combustion chamber CC via line 5.

Via line 7, the resulting $SO_2$ containing gas is withdrawn and optionally admixed with oxygen passed via line 6. This gas mixture is fed via line 8 into converter CO.

The converter CO features five catalyst stages, also called catalyst beds B1 to B5, whereby the number can be freely chosen, preferably between 2 and 12. After the first stage, the respective product gas is passed via line 9 into heat exchanger H1 and is returned to the converter CO via line 10 and 11, such that it then also contains the added oxygen from line 4.

This continues then to the second catalytic bed B2 and the gas leaves this said bed towards a heat exchanger H2 via line 12 and returns to the converter bed 3 B3 via line 13. Similarly, and typically this continues accordingly to bed B4.

Exemplary at bed 4, but also possible at any other bed upstream, leaving B4, the gas is cooled at heat exchangers H4-1 and H4-2 and then fed to the intermediate absorber for the removal of the $SO_3$ via lines 16, 17 and 18. Returning from the intermediate absorber, the gas is heated up to the desired gas inlet temperature of the last bed B5 at the heat exchanger H4-1 via lines 19 and 20.

Eventually the gas leaving B5 is fed to the final absorption and cooled at the heat exchanger H5 via lines 21 and 22.

According to said fig. 12., a typical sulphur combustion gas with 18 vol.-% $SO_2$ using solely air as raw material is fed to a first catalytic bed at typically ~470°C, thereafter partially oxidized by a catalyst to $SO_3$ to an extend determined by its $O_2$ concentration, adiabatically arriving at a temperature of approximately 580°C, can achieve an overall conversion of the inlet amount of $SO_2$ to approximately 28%. The related temperature-conversion diagram is presented at Fig. 9. Adding an appropriate amount of bulk oxygen to said exit from the first bed, will achieve a virtual overall gas composition of e.g. 18 vol.-% $SO_2$ and 14.7 vol.-% $O_2$. Feeding said gas with a conventional temperature to the second catalytic bed, and in continuation to further subsequent catalytic beds with appropriate intermediate cooling between beds, will in this example arrive at a total degree of conversion of approximately 96% prior to the intermediate absorption of the $SO_3$. At this 4+1 arrangement, a total desired conversion of >99.8 % can be achieved.

**Example according to a process shown in fig.12**

As an example, a current state of the art 5,000 mtpd (metric ton per day) sulphuric acid plant is fed with 11,5 vol.-%. $SO_2$ feed gas originating from sulphur combustion with air. While the gas flow at 100% load (nameplate capacity) amounts to ~400,000 $Nm^3$/h, such plant offers a typical turndown ratio of 40% load. It must be noted that the entire plant is virtually sized on the basis of overall gas flow rates and only to a lower degree on actual acid production.

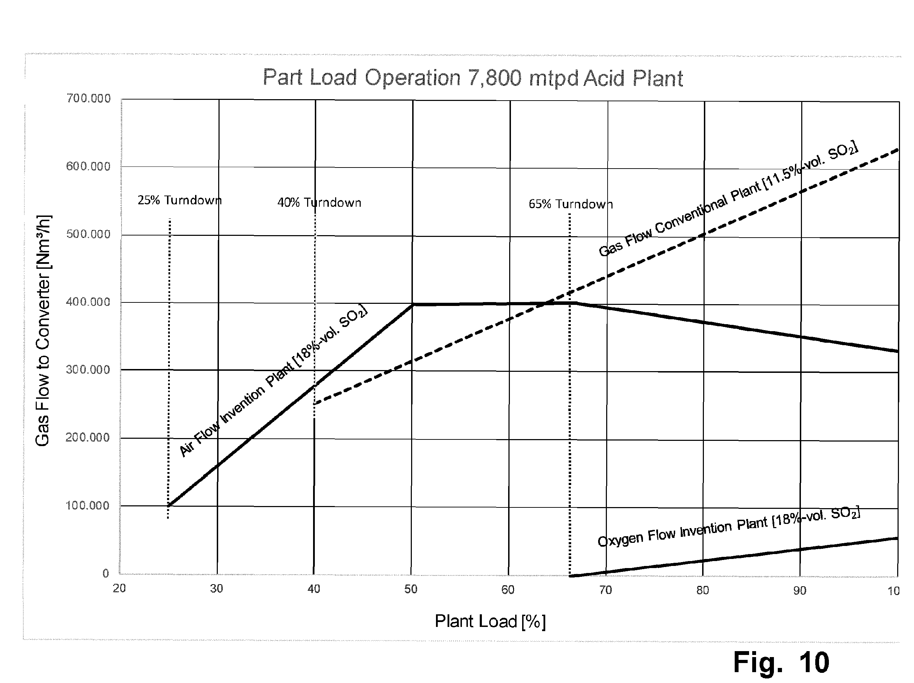

Thus, an acid plant designed in accordance with the invention for same gas throughput of ~400,000 $Nm^3$/h but operated at say 18 vol.-% $SO_2$ instead of traditional 11.5 vol.-% $SO_2$, would lead to an acid capacity of 7,800 mtpd, instead of the original 5,000 mtpd. Accordingly, an inventive acid plant offers a turndown ratio of ~25% load. As a result, cost savings per ton of installed acid plant capacity are evident, and the operational flexibility is significantly increased. The gas-flow vs. plant load (%) diagram is presented at fig. 10.

While such specific acid plant size results in only 18.0/11.5 ~64 % of the conventional size, the resulting capital cost per installed ton of acid production amounts to only ~75% of a conventional plant. Thus, a potential 25% cost saving, -compared to conventional technology, makes such plant according to this invention very attractive.

The significant cost savings resulting from this invention are partly offset by the cost of provision of the bulk $O_2$, whereas its use can be minimized by this invention. Typically, whenever the plant load is below say ~65% of nominal capacity, no oxygen would be required, and the plant would be operated with conventional parameters.

**List of Reference Numerals**

| 1-4, 7-22 | line |
|---|---|
| 5, 6 | line optional |
| S | burner |
| CC | combustion chamber |

H0              housing
E               heat exchanger
CO              converter
H1, H2, H3, H5  heat exchanger
H4-1, H4-2      heat exchanger
B1 - B5         catalyst bed

**Claims**

1. A process for producing sulphuric acid, in which a feed gas containing sulphur dioxide and oxygen at least partly reacts in a converter featuring at least two catalyst beds to form sulphur trioxide at a given temperature, and in which the produced sulphur trioxide containing gas introduced into an absorber wherein it is further converted to sulphuric acid, **characterized in that**

   - the feed gas to the first catalyst bed is generated by combustion of elemental sulphur with air or oxygen enriched air, and
   - said feed gas featuring a sulphur dioxide content between 14.0 and 20.0 vol-%, and
   - said feed gas featuring a molar ratio of oxygen to sulphur dioxide of $0.05 < R < 1.0$ of $O_2/SO_2$, and
   - the gas leaving the first catalyst bed is cooled and mixed with bulk oxygen or oxygen enriched air prior to entering the subsequent bed, with an amount sufficient to achieve an overall ratio of $O_2/SO_2$ of $0.4 < R < 1.1$, relative to the initial feed gas $SO_2$ concentration to the first catalyst bed and
   - no oxygen addition or oxygen enriched air addition is required when below a for a load of a ratio of a nominal concentration of 11.5 vol.-% $SO_2$ to the $SO_2$ content in the feed, while the required amount of oxygen is gradually reduced from a nominal figure at name plate capacity down to zero at said ratio.

2. The process according to claim 1, **characterized in that** the gas feed to the first catalyst bed has a sulphur dioxide content between 17 and 19 vol.% and a molar ratio of $O_2/SO_2$ of $0.15 < R < 0.22$.

3. The process according to any of the previous claims, **characterized in that** the gas leaving the second or further subsequent catalyst beds is cooled and mixed with bulk oxygen or oxygen enriched air to achieve an overall ratio of $O_2/SO_2$ of $0.7 < R < 1.2$, relative to the initial feed gas $SO_2$ concentration to the first catalyst bed.

4. The process according to any of the previous claims, **characterized in that** the feed $SO_2$ concentration of the gas to the first catalyst bed is gradually reduced down to conventional conditions when operating the plant below name plate capacity down to a ratio of (11.5% $SO_2$ / %feed $SO_2$) load (e.g. from 18 vol.-% at nameplate capacity down to 11.5 vol.-% $SO_2$ at a load ratio of 064, equivalent to ~65% load), while simultaneously and progressively diminishing the oxygen or enriched air supply downstream the first catalyst bed to zero at said load.

5. The process according to any of the previous claims, **characterized in that** at least two catalyst beds are foreseen which are connected in series.

6. The process according to any of the previous claims, **characterized in that** the all catalyst beds include a catalyst comprising vanadium pentoxide.

7. The process according to any of the previous claims, **characterized in that** the gas is supplied to the first catalyst bed with a pressure of 1 to 30 bar (absolute), and particularly preferably of 1.5 to 10 bar (absolute).

8. The process according to any of the previous claims, **characterized in that** the gas stream is cooled between two subsequent catalyst stages.

9. A process for producing sulphuric acid in a plant, in which a feed gas containing sulphur dioxide and oxygen at least partly reacts in a converter featuring at least one catalyst bed to form sulphur trioxide at a given temperature, and in which the produced sulphur trioxide containing gas is introduced into an absorber wherein it is further converted to sulphuric acid, wherein the feed gas to the first catalyst bed is generated by combustion of elemental sulphur with air or oxygen enriched air, said feed gas featuring a sulphur dioxide content between 14.0 and 20.0 vol-%, and a molar ratio of oxygen to sulphur dioxide of $0.05 < R < 1.0$, **characterized in that** for a sulphur dioxide content between 14.0 and 19.0 vol-% the range of gas inlet temperature $T_{in}$ to the first catalytic bed is between $T_{in-min}$ and $T_{in-max}$, which are calculated as

$$T_{in-min} = -0.066 \times c^3 + 3.3 \times c^2 - 44.2 \times c + 585$$

and

$$T_{in-max} = -0.066 \times c^3 + 3.3 \times c^2 - 44.2 \times c + 615$$

with c [%-vol.] defined as the $SO_2$ concentration of the feed gas
or for a sulphur dioxide content above 19.0 vol-% and below 20.0 vol-%, the range of gas inlet temperature $T_{in}$ is fixed to 490 °C +/- 15 °C.

10. The process according to claim 9 **characterized in that** at least two catalyst beds connected in series to form sulphur trioxide at a given temperature, and oxygen or oxygen enriched air is admixed to the gas leaving the first catalyst bed and prior to entering the second catalyst bed, to an amount to enable the overall desired conversion of $SO_2$ considering all catalyst beds of the plant.

11. The process according to claim 10, **characterized in that** the gas leaving the first catalyst bed is cooled and mixed with bulk oxygen or oxygen enriched air prior to entering the subsequent bed, with an amount sufficient to achieve an overall ratio of $O_2/SO_2$ of 0.4 < R < 1.1, relative to the initial feed gas $SO_2$ concentration to the first catalyst bed.

12. The process according to claim 10 or 11, **characterized in that** the gas leaving the second or further subsequent catalyst beds is cooled and mixed with bulk oxygen or oxygen enriched air to achieve an overall ratio of $O_2/SO_2$ of 0.7 < R < 1.2, relative to the initial feed gas $SO_2$ concentration to the first catalyst bed.

13. The process according to any of the previous claims 9 to 12, **characterized in that** the gas feed to the first catalyst bed has a sulphur dioxide content between 17 and 19 vol.% and a molar ratio of $O_2/SO_2$ of 0.15 < R < 0.22.

14. The process according to claim 9, **characterized in that** the plant is operated below 65% of nameplate capacity of the plant and no oxygen is admixed at any of the catalyst bed subsequent to the first catalyst bed.

15. The process according to claim 14, **characterized in that** the feed $SO_2$ concentration of the gas to the first catalyst bed is gradually reduced down to 11.5 vol.-% $SO_2$.

16. The process according to any of the previous claims 9 to 15, **characterized in that** all catalyst beds include a catalyst comprising vanadium pentoxide.

17. The process according to any of the previous claims 9 to 16, **characterized in that** the gas is supplied to the first catalyst bed with a pressure of 1 to 30 bar (absolute), and particularly preferably of 1.5 to 10 bar (absolute).

18. The process according to any of the previous claims 9 to 17, **characterized in that** the gas stream is cooled between two subsequent catalyst stages.

19. Plant for producing sulphuric acid according to any of claims 9 to 18, **characterized in that** via a control unit for a sulphur dioxide content between 14.0 and 19.0 vol-% the range of the gas inlet temperature $T_{in}$ into to the first catalyst bed is controlled or regulated to a range between $T_{in-min}$ and $T_{in-max}$, which are calculated as

$$T_{in-min} = -0.066 \times c^3 + 3.3 \times c^2 - 44.2 \times c + 585$$

and

$$T_{in-max} = -0.066 \times c^3 + 3.3 \times c^2 - 44.2 \times c + 615$$

with c [%-vol.] defined as the $SO_2$ concentration of the feed gas
or for a sulphur dioxide content above 19.0 vol-% and below 20.0 vol-%, the range of gas inlet temperature $T_{in}$ is controlled or regulated to 490 °C +/- 15 °C.

**Patentansprüche**

1. Verfahren zur Herstellung von Schwefelsäure, bei dem ein Schwefeldioxid und Sauerstoff enthaltendes Zufuhrgas in einem Konverter mit mindestens zwei Katalysatorbetten bei einer bestimmten Temperatur zumindest teilweise zu Schwefeltrioxid umgesetzt wird und bei dem das erzeugte schwefeltrioxidhaltige Gas in einen Absorber eingeleitet und dort weiter zu Schwefelsäure umgesetzt wird, **dadurch gekennzeichnet, dass**

   - das dem ersten Katalysatorbett zugeführte Gas durch Verbrennung von elementarem Schwefel mit Luft oder mit Sauerstoff angereicherter Luft erzeugt wird, und
   - das Speisegas einen Schwefeldioxidgehalt zwischen 14,0 und 20,0 Vol-% aufweist und
   - das Zufuhrgas ein molares Verhältnis von Sauerstoff zu Schwefeldioxid von $0,05 < R < 1,0$ $O_2/SO_2$ aufweist, und
   - das das erste Katalysatorbett verlassende Gas gekühlt und vor dem Eintritt in das nachfolgende Bett mit Massensauerstoff oder sauerstoffangereicherter Luft in einer Menge gemischt wird, die ausreicht, um ein Gesamtverhältnis von $O_2/SO_2$ von $0,4 < R < 1,1$, bezogen auf die anfängliche $SO_2$-Konzentration des Zufuhrgases im ersten Katalysatorbett, zu erreichen, und
   - keine Zugabe von Sauerstoff oder sauerstoffangereicherter Luft erforderlich ist, wenn unterhalb von a für eine Belastung eines Verhältnisses einer Nennkonzentration von 11,5 Vol.-% $SO_2$ zum $SO_2$-Gehalt in der Beschickung, während die erforderliche Sauerstoffmenge schrittweise von einem Nennwert bei der Kapazität der Namensplatte bis auf Null bei diesem Verhältnis reduziert wird.

2. Verfahren nach Anspruch 1, **dadurch gekennzeichnet, dass** das dem ersten Katalysatorbett zugeführte Gas einen Schwefeldioxidgehalt zwischen 17 und 19 Vol.-% und ein Molverhältnis von $O_2/SO_2$ von $0,15 < R < 0,22$ aufweist.

3. Verfahren nach einem der vorhergehenden Ansprüche, **dadurch gekennzeichnet, dass** das Gas, das das zweite oder weitere nachfolgende Katalysatorbetten verlässt, gekühlt und mit Sauerstoff oder sauerstoffangereicherter Luft gemischt wird, um ein Gesamtverhältnis von $O_2/SO_2$ von $0,7 < R < 1,2$, bezogen auf die anfängliche $SO_2$-Konzentration des Zufuhrgases zum ersten Katalysatorbett, zu erreichen.

4. Verfahren nach einem der vorhergehenden Ansprüche, **dadurch gekennzeichnet, dass** die $SO_2$-Zufuhrkonzentration des Gases zum ersten Katalysatorbett allmählich auf herkömmliche Bedingungen reduziert wird, wenn die Anlage unterhalb der Nennkapazität bis zu einem Verhältnis von ($11,5\%$ $SO_2$ / % Zufuhr $SO_2$) Last betrieben wird (z.B. von 18 Vol.-% bei Nennkapazität bis zu 11,5 Vol.-% $SO_2$ bei einem Lastverhältnis von 064, was -65% Last entspricht), während gleichzeitig und allmählich die Sauerstoff- oder angereicherte Luftzufuhr stromabwärts des ersten Katalysatorbetts auf Null bei der genannten Last verringert wird.

5. Verfahren nach einem der vorhergehenden Ansprüche, **dadurch gekennzeichnet, dass** man mindestens zwei Katalysatorbetten vorgesehen sind, die in Reihe geschaltet sind.

6. Verfahren nach einem der vorhergehenden Ansprüche, **dadurch gekennzeichnet, dass** alle Katalysatorbetten einen Katalysator enthalten, der Vanadiumpentoxid umfasst.

7. Verfahren nach einem der vorhergehenden Ansprüche, **dadurch gekennzeichnet, dass** das Gas dem ersten Katalysatorbett mit einem Druck von 1 bis 30 bar (absolut) und besonders bevorzugt von 1,5 bis 10 bar (absolut) zugeführt wird.

8. Verfahren nach einem der vorhergehenden Ansprüche, **dadurch gekennzeichnet, dass** der Gasstrom zwischen zwei aufeinanderfolgenden Katalysatorstufen gekühlt wird.

9. Verfahren zur Herstellung von Schwefelsäure in einer Anlage, bei dem ein Schwefeldioxid und Sauerstoff enthaltendes Einsatzgas zumindest teilweise in einem Konverter mit mindestens einem Katalysatorbett unter Bildung von Schwefeltrioxid bei einer gegebenen Temperatur reagiert, und bei dem das erzeugte, Schwefeltrioxid enthaltende Gas in einen Absorber eingeleitet wird, in dem es weiter in Schwefelsäure umgewandelt wird, wobei das dem ersten Katalysatorbett zugeführte Gas durch Verbrennung von elementarem Schwefel mit Luft oder sauerstoffangereicherter Luft erzeugt wird, wobei das Einsatzgas einen Schwefeldioxidgehalt zwischen 14.0 und 20,0 Vol-% und ein molares Verhältnis von Sauerstoff zu Schwefeldioxid von $0,05 < R < 1,0$ aufweist, **dadurch gekennzeichnet, dass** für einen Schwefeldioxidgehalt zwischen 14,0 und 19,0 Vol-% der Bereich der Gaseintrittstemperatur Tin in das erste katalytische Bett zwischen $T_{in-min}$ und $T_{in-max}$ liegt, die berechnet werden als

$$T_{in-min} = -0,066 \times c3 + 3,3 \times c2 - 44,2 \times c + 585$$

und

$$T_{in-max} = -0,066 \times c3 + 3,3 \times c2 - 44,2 \times c + 615$$

wobei c [%-Vol.] als die $SO_2$-Konzentration des Speisegases definiert oder bei einem Schwefeldioxidgehalt über 19,0 Vol-% und unter 20,0 Vol-% der Bereich der Gaseintrittstemperatur $T_{in}$ auf 490 °C +/- 15 °C festgelegt ist.

10. Verfahren nach Anspruch 9, **dadurch gekennzeichnet, dass** mindestens zwei Katalysatorbetten in Reihe geschaltet werden, um bei einer bestimmten Temperatur Schwefeltrioxid zu bilden, und dass dem Gas, das das erste Katalysatorbett verlässt und in das zweite Katalysatorbett eintritt, Sauerstoff oder sauerstoffangereicherte Luft in einer Menge beigemischt wird, die die insgesamt gewünschte Umwandlung von $SO_2$ unter Berücksichtigung aller Katalysatorbetten der Anlage ermöglicht.

11. Verfahren nach Anspruch 10, **dadurch gekennzeichnet, dass** das das erste Katalysatorbett verlassende Gas gekühlt und vor dem Eintritt in das nachfolgende Bett mit Massensauerstoff oder sauerstoffangereicherter Luft gemischt wird, und zwar in einer Menge, die ausreicht, um ein Gesamtverhältnis von $O_2/SO_2$ von 0,4 < R < 1,1, bezogen auf die anfängliche $SO_2$-Konzentration des Speisegases im ersten Katalysatorbett, zu erreichen.

12. Verfahren nach Anspruch 10 oder 11, **dadurch gekennzeichnet, dass** das Gas, das das zweite oder weitere nachfolgende Katalysatorbetten verlässt, gekühlt und mit Sauerstoff oder sauerstoffangereicherter Luft gemischt wird, um ein Gesamtverhältnis von $O_2/SO_2$ von 0,7 < R < 1,2, bezogen auf die anfängliche $SO_2$-Einsatzgaskonzentration im ersten Katalysatorbett, zu erreichen.

13. Verfahren nach einem der vorhergehenden Ansprüche 9 bis 12, **dadurch gekennzeichnet, dass** das dem ersten Katalysatorbett zugeführte Gas einen Schwefeldioxidgehalt zwischen 17 und 19 Vol.-% und ein molares Verhältnis von $O_2/SO_2$ von 0,15 < R < 0,22 aufweist.

14. Verfahren nach Anspruch 9, **dadurch gekennzeichnet, dass** die Anlage mit weniger als 65 % der Nennkapazität der Anlage betrieben wird und dem ersten Katalysatorbett kein Sauerstoff beigemischt wird.

15. Verfahren nach Anspruch 14, **dadurch gekennzeichnet, dass** die $SO_2$-Konzentration des dem ersten Katalysatorbett zugeführten Gases schrittweise bis auf 11,5 Vol.-% $SO_2$ reduziert wird.

16. Verfahren nach einem der vorhergehenden Ansprüche 9 bis 15, **dadurch gekennzeichnet, dass** alle Katalysatorbetten einen Vanadiumpentoxid umfassenden Katalysator enthalten.

17. Verfahren nach einem der vorhergehenden Ansprüche 9 bis 16, **dadurch gekennzeichnet, dass** das Gas dem ersten Katalysatorbett mit einem Druck von 1 bis 30 bar (absolut) und besonders bevorzugt von 1,5 bis 10 bar (absolut) zugeführt wird.

18. Verfahren nach einem der vorhergehenden Ansprüche 9 bis 17, **dadurch gekennzeichnet, dass** der Gasstrom zwischen zwei aufeinanderfolgenden Katalysatorstufen gekühlt wird.

19. Anlage zur Herstellung von Schwefelsäure nach einem der Ansprüche 9 bis 18, **dadurch gekennzeichnet, dass** über eine Steuereinheit für einen Schwefeldioxidgehalt zwischen 14,0 und 19,0 Vol-% der Bereich der Gaseintrittstemperatur $T_{in}$ in das erste Katalysatorbett auf einen Bereich zwischen $T_{in-min}$ und $T_{in-max}$ gesteuert oder geregelt wird, die sich berechnen als

$$T_{in-min} = -0,066 \times c3 + 3,3 \times c2 - 44,2 \times c + 585$$

und

$$T_{in-max} = -0,066 \times c3 + 3,3 \times c2 - 44,2 \times c + 615$$

wobei c [%-Vol.] als die SO$_2$-Konzentration des Speisegases definiert oder bei einem Schwefeldioxidgehalt über 19,0 Vol-% und unter 20,0 Vol-% der Bereich der Gaseintrittstemperatur T$_{in}$ auf 490 °C +/- 15 °C festgelegt ist.

**Revendications**

1. Procédé de production d'acide sulfurique, dans lequel un gaz d'alimentation contenant du dioxyde de soufre et de l'oxygène réagit au moins partiellement dans un convertisseur comportant au moins deux lits catalytiques pour former du trioxyde de soufre à une température donnée, et dans lequel le gaz contenant le trioxyde de soufre produit est introduit dans un absorbeur dans lequel il est en outre converti en acide sulfurique, **caractérisé en ce que**

   - le gaz d'alimentation vers le premier lit catalytique est généré par combustion de soufre élémentaire avec de l'air ou de l'air enrichi en oxygène, et
   - ledit gaz d'alimentation présente une teneur en dioxyde de soufre comprise entre 14,0 et 20,0 % en volume, et
   - ledit gaz d'alimentation présente un rapport molaire entre l'oxygène et le dioxyde de soufre de 0,05 < R < 1,0 de O$_2$ / SO$_2$, et
   - le gaz sortant du premier lit catalytique est refroidi et mélangé avec de l'oxygène en vrac ou de l'air enrichi en oxygène avant d'entrer dans le lit suivant, en quantité suffisante pour obtenir un rapport global O$_2$ / SO$_2$ de 0,4 < R < 1,1, par rapport à la concentration initiale en SO$_2$ du gaz d'alimentation dans le premier lit catalytique, et
   - aucun ajout d'oxygène ou d'air enrichi en oxygène n'est nécessaire lorsque la charge est inférieure à un rapport entre une concentration nominale de 11,5 % en volume de SO$_2$ et la teneur en SO$_2$ dans l'alimentation, tandis que la quantité d'oxygène requise est progressivement réduite à partir d'une valeur nominale à la capacité nominale jusqu'à zéro audit rapport.

2. Procédé selon la revendication 1, **caractérisé en ce que** le gaz d'alimentation vers le premier lit catalytique a une teneur en dioxyde de soufre comprise entre 17 et 19 % en volume et un rapport molaire O$_2$ / SO$_2$ de 0,15 < R < 0,22,

3. Procédé selon l'une quelconque des revendications précédentes, **caractérisé en ce que** le gaz sortant du deuxième lit catalytique ou des lits catalytiques suivants est refroidi et mélangé avec de l'oxygène en vrac ou de l'air enrichi en oxygène pour obtenir un rapport global O$_2$ / SO$_2$ de 0,7 < R < 1,2, par rapport à la concentration initiale en SO$_2$ du gaz d'alimentation vers le premier lit catalytique.

4. Procédé selon l'une quelconque des revendications précédentes, **caractérisé en ce que** la concentration en SO$_2$ dans le gaz alimentant le premier lit catalytique est progressivement réduite jusqu'à des conditions conventionnelles lorsque l'installation fonctionne en dessous de sa capacité nominale, jusqu'à un rapport (11,5 % SO$_2$ / pourcentage de SO$_2$ dans l'alimentation) (par exemple de 18 % en volume à la capacité nominale à 11,5 % en volume de SO$_2$ à un rapport de charge de 0,64, ce qui équivaut à une charge d'environ 65 %), tout en diminuant simultanément et progressivement l'apport d'oxygène ou d'air enrichi en aval du premier lit catalytique jusqu'à zéro à ladite charge.

5. Procédé selon l'une quelconque des revendications précédentes, **caractérisé en ce qu'**au moins deux lits catalytiques sont prévus, qui sont connectés en série.

6. Procédé selon l'une quelconque des revendications précédentes, **caractérisé en ce que** tous les lits catalytiques comprennent un catalyseur comprenant du pentoxyde de vanadium.

7. Procédé selon l'une quelconque des revendications précédentes, **caractérisé en ce que** le gaz est fourni au premier lit catalytique à une pression qui est comprise entre 1 et 30 bar (absolus), et de préférence comprise entre 1,5 et 10 bar (absolus).

8. Procédé selon l'une quelconque des revendications précédentes, **caractérisé en ce que** le flux de gaz est refroidi entre deux stades catalytiques successifs.

9. Procédé de production d'acide sulfurique dans une installation, dans laquelle un gaz d'alimentation contenant du dioxyde de soufre et de l'oxygène réagit au moins partiellement dans un convertisseur comportant au moins un lit catalytique pour former du trioxyde de soufre à une température donnée, et dans laquelle le gaz contenant le trioxyde de soufre produit est introduit dans un absorbeur dans lequel il est en outre transformé en acide sulfurique, dans lequel le gaz d'alimentation du premier lit catalytique est généré par combustion de soufre élémentaire avec de l'air ou de l'air enrichi en oxygène, ledit gaz d'alimentation présentant une teneur en dioxyde de soufre comprise entre 14,0 et 20,0 % en volume, et un rapport molaire entre l'oxygène et le dioxyde de soufre de 0,05 < R < 1,0, **caractérisé en ce que** pour une teneur en dioxyde de soufre comprise entre 14,0 et 19,0 % en volume, la plage de température d'entrée du gaz $T_{in}$ dans le premier lit catalytique est comprise entre $T_{in-min}$ et $T_{in-max}$, qui sont calculées comme suit

$$\mathrm{Ti}_{n-min} = -0,066 \times c^3 + 3,3 \times c^2 - 44,2 \times c + 585$$

et

$$\mathrm{T}_{in-max} = -0,066 \times c^3 + 3,3 \times c^2 - 44,2 \times c + 615$$

avec c [pourcentage en volume] défini comme la concentration en $SO_2$ du gaz d'alimentation ou pour une teneur en dioxyde de soufre supérieure à 19,0 % en volume et inférieure à 20,0 % en volume, la plage de température d'entrée du gaz $T_{in}$ est fixée à 490 °C ± 15 °C.

10. Procédé selon la revendication 9, **caractérisé en ce qu'**au moins deux lits catalytiques sont connectés en série pour former du trioxyde de soufre à une température donnée, et de l'oxygène ou de l'air enrichi en oxygène est mélangé au gaz sortant du premier lit catalytique et avant d'entrer dans le deuxième lit catalytique, en une quantité permettant la conversion globale souhaitée de $SO_2$ en tenant compte de tous les lits catalytiques de l'installation.

11. Procédé selon la revendication 10, **caractérisé en ce que** le gaz sortant du premier lit catalytique est refroidi et mélangé avec de l'oxygène en vrac ou de l'air enrichi en oxygène avant d'entrer dans le lit suivant, en une quantité suffisante pour obtenir un rapport global $O_2 / SO_2$ de 0,4 < R < 1,1, par rapport à la concentration initiale en $SO_2$ du gaz d'alimentation dans le premier lit catalytique.

12. Procédé selon la revendication 10 ou la revendication 11, **caractérisé en ce que** le gaz sortant du deuxième lit catalytique ou des lits catalytiques suivants est refroidi et mélangé avec de l'oxygène en vrac ou de l'air enrichi en oxygène pour obtenir un rapport global $O_2 / SO_2$ de 0,7 < R < 1,2, par rapport à la concentration initiale en $SO_2$ du gaz d'alimentation dans le premier lit catalytique.

13. Procédé selon l'une quelconque des revendications précédentes 9 à 12, **caractérisé en ce que** le gaz d'alimentation vers le premier lit catalytique a une teneur en dioxyde de soufre comprise entre 17 et 19 % en volume et un rapport molaire $O_2 / SO_2$ de 0,15 < R < 0,22.

14. Procédé selon la revendication 9, **caractérisé en ce que** l'installation est exploitée à moins de 65 % de sa capacité nominale et qu'aucun oxygène n'est ajouté à l'un quelconque des lits catalytiques situés en aval du premier lit catalytique.

15. Procédé selon la revendication 14, **caractérisé en ce que** la concentration en $SO_2$ du gaz alimentant le premier lit catalytique est progressivement réduite jusqu'à 11,5 % en volume de $SO_2$.

16. Procédé selon l'une quelconque des revendications 9 à 15, **caractérisé en ce que** tous les lits catalytiques comprennent un catalyseur contenant du pentoxyde de vanadium.

17. Procédé selon l'une quelconque des revendications 9 à 16, **caractérisé en ce que** le gaz est amené au premier lit catalytique à une pression comprise entre 1 et 30 bar (absolus), et de préférence comprise entre 1,5 et 10 bar (absolus).

18. Procédé selon l'une quelconque des revendications 9 à 17, **caractérisé en ce que** le flux gazeux est refroidi entre deux stades catalytiques successifs.

19. Installation destinée à la production d'acide sulfurique selon l'une quelconque des revendications 9 à 18, **caractérisée en ce que**, par l'intermédiaire d'une unité de commande pour une teneur en dioxyde de soufre comprise entre 14,0 et 19,0 % en volume, la plage de température d'entrée du gaz $T_{in}$ dans le premier lit catalytique est commandée ou régulée dans une plage comprise entre $T_{in-min}$ et $T_{in-max}$, qui sont calculées comme suit

$$T_{in-min} = -0,066 \times c^3 + 3,3 \times c^2 - 44,2 \times c + 585$$

et

$$T_{in-max} = -0,066 \times c^3 + 3,3 \times c^2 - 44,2 \times c + 615$$

avec c [pourcentage en volume] défini comme la concentration en $SO_2$ du gaz d'alimentation
ou pour une teneur en dioxyde de soufre supérieure à 19,0 % en volume et inférieure à 20,0 % en volume, la plage
de température d'entrée du gaz $T_{in}$ est contrôlée ou régulée à 490 °C $\pm$ 15 °C.

$$T_{in-min} = -0,066 \times c^3 + 3,3 \times c^2 - 44,2 \times c + 585$$

# Sulphur Burning with Air - Residual $O_2$

Fig. 1

O$_2$ / SO$_2$ Ratio of Gas based on S-Combustion with Air

Ratio of O$_2$ / SO$_2$ oncentration ex S-Burning

SO$_2$-concentration ex S-Burning [%-vol.]

**Fig. 2**

Maximum achievable Conversion from $SO_2$ to $SO_3$ of S-burner Gas

*Y-axis:* Maximum Conversion of $SO_2$ [%]

*X-axis:* $SO_2$-concentration ex S-Burning [%-vol.]

**Fig. 3**

EP 4 054 977 B1

## Combustion Temperature of Sulphur

Fig. 4

EP 4 054 977 B1

Gas Exit Temperature vs. Feed SO₂-Concentration

Fig. 5

EP 4 054 977 B1

Oxidation of $SO_2$ gas [18.0 %-vol.] with $O_2$ [2.6 %-vol.]

Equilibrium Line

Operating Line

Conversion of $SO_2$ [%]

Temperature [° C]

**Fig. 6**

EP 4 054 977 B1

Conversion of Concentrated S-Burner Gas vs. SO$_2$ Concentration to Bed #1

Fig. 7

EP 4 054 977 B1

**Gas Inlet and Exit-Temperature Bed#1 vs. S-Burner Gas Feed (with Air)**

Fig. 8

EP 4 054 977 B1

Acid Plant Concept Contact Section using Sub-Stoichiometric Feed Gas to
Bed#1

18.0 % $SO_2$ ; 14.7 % $O_2$

18.0 % $SO_2$ ; 2.6 % $O_2$

Conversion of $SO_2$ [%]

Temperature [°C]

Fig. 9

EP 4 054 977 B1

Part Load Operation 7,800 mtpd Acid Plant

Fig. 10

# Conventional Acid Plant with 3+2Arrangement

WHB = Waste
Heat Boiler

**Fig. 11**

EP 4 054 977 B1

Sub-Stoichiometric Operation of Bed#1 in 4+1Arrangement

Fig. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102004022506
- WO 2005105666 A2
- DE 2223131
- EP 0218411 A1
- EP 2256085 A2
- WO 2005105666 A

**Non-patent literature cited in the description**

- Ullmann's Encyclopaedia of Industrial Chemistry, vol. A25, 635-700